# EUROPÄISCHE PATENTANMELDUNG

(11) **EP 4 559 870 A1**
(43) Veröffentlichungstag der Anmeldung: **28.05.2025**
(21) Anmeldenummer: 23020513.0
(22) Anmeldetag: 21.11.2023
(51) Int. Cl.: C01B 3/04

(54) **VERFAHREN UND ANLAGE ZUR GEWINNUNG EINES WASSERSTOFF ENTHALTENDEN PRODUKTS**

(71) Anmelder: Linde GmbH, 82049 Pullach (DE)
(72) Erfinder: Reinke, Michael, 82049 Pullach (DE); Peschel, Andreas, 82049 Pullach (DE); Heinzel, Albrecht, 82049 Pullach (DE)
(74) Vertreter: Fischer, Werner

(57) **Zusammenfassung**

Die Erfindung betrifft ein Verfahren sowie eine Anlage (100) zur Herstellung eines Wasserstoff enthaltenden Produkts (6), wobei ein ammoniakhaltiger Einsatz (2) in einer Spalteinrichtung (20) unter Erhalt eines nicht umgesetztes Ammoniak sowie Wasserstoff und Stickstoff enthaltenden Spaltgases (3) umgesetzt wird, aus dem das Wasserstoff enthaltende Produkt (6) entsteht. Kennzeichnend hierbei ist, dass in der Spalteinrichtung (20) mit Hilfe eines autotherm betriebenen Reaktors (AT-Reaktor) (20a) aus dem ammoniakhaltigen Einsatz (2) ein heißes Spaltgas (2a) erzeugt und zur Beheizung eines gasbeheizten Reformers (GHR) (20b) verwendet wird.

## Beschreibung

Die Erfindung betrifft ein Verfahren und eine Anlage zur Herstellung eines Wasserstoff enthaltenden Produkts, wobei ein ammoniakhaltiger Einsatz in einer Spalteinrichtung unter Erhalt eines nicht umgesetztes Ammoniak sowie Wasserstoff und Stickstoff enthaltenden Spaltgases umgesetzt wird, aus dem das Wasserstoff enthaltende Produkt entsteht.

### Hintergrund der Erfindung

Ammoniak kann gemäß 2 NH₃ → N₂ + 3 H₂ katalytisch zu Stickstoff und Wasserstoff zerlegt (gecrackt, gespalten) werden. Die Spaltreaktion ist endotherm und wird durch niedrigen Druck und hohe Temperatur begünstigt. Um einen Wasserstoffverdichter zu vermeiden oder zumindest den Verdichtungsaufwand zu reduzieren, sind dennoch höhere Drücke wünschenswert.

Die Spaltprodukte Wasserstoff und Stickstoff können in einem Gemisch als Produkt bereitgestellt werden, oder es kann eine Aufreinigung des Wasserstoffs erfolgen. Ein Wasserstoff-Stickstoff-Gemisch wird dabei auch als Formiergas bezeichnet. Auch eine weitere Nutzung des Wasserstoffs bzw. Wasserstoff-Stickstoff-Gemischs, beispielsweise in einer Gasturbine, die mit einem Generator gekoppelt ist, kann erfolgen. In allen Fällen, die jeweils Ausgestaltungen der Erfindung entsprechen können, wird also Wasserstoff aus Ammoniak gewonnen. Die "Gewinnung eines Wasserstoff enthaltenden Produkts" im hier verstandenen Sinn schließt also die Gewinnung eines wasserstoffhaltigen Gasgemischs, weiterer Produkte wie Stickstoff und/oder die anschließende Nutzung nicht aus. Nachfolgend wird lediglich aus Gründen der Übersichtlichkeit überwiegend auf ein (im Wesentlichen reines) Wasserstoffprodukt Bezug genommen.

Aus der Patent- und Nichtpatentliteratur sind unterschiedliche Verfahrenskonzepte und Reaktoren für die Zerlegung von Ammoniak zu Wasserstoff und Stickstoff beschrieben. Zu weiteren Details wird auf entsprechende Literatur verwiesen, statt vieler beispielsweise auf D. Sima et al., Int. J. Hydrogen Energy 45 (2020) 9342-9352.

Entsprechende Verfahrenskonzepte können einen Spaltreaktor (auch als Ammoniakcracker bezeichnet) nach Art eines Dampfreformers umfassen, dem eine Druckwechseladsorption zur Wasserstoffreinigung zugeordnet ist. Beispielsweise sei in diesem Zusammenhang auf die EP 4 112 539 A1 und die EP 4 112 540 A1 verwiesen, deren Inhalte hier in vollem Umfang aufgenommen werden.

Ein Spaltreaktor kann einen Feuerraum, in dem mit Katalysatormaterial gefüllte Reaktionsrohre angeordnet sind, sowie ein Abhitzesystem aufweisen. Der Feuerraum kann durch einen oder mehrere mit einem Brennstoff betriebene Brenner beheizt werden, die Energie für die endotherm ablaufende Spaltung des durch die Reaktionsrohre geführten Ammoniaks liefern.

Weiterhin ist es möglich, anstelle eines allothermen, auf einem Dampfreformer basierenden Spaltreaktors, einen autotherm betreibbaren Reaktor nach Art eines Autothermalreformers (ATR) oder eines Partialoxidationsreaktors (POX) zur Ammoniakspaltung einzusetzen.

Die Wärme des Spaltgases, das typischerweise Wasserstoff, Stickstoff, nicht umgesetztes Ammoniak sowie Wasserdampf enthält, und das den Spaltreaktor mit einer sehr hohen Temperatur verlässt, muss aus wirtschaftlichen Gründen energetisch genutzt werden. Eine Nutzung dieser Wärme zur Dampfproduktion ist nicht sinnvoll, da die Ammoniakspaltung ohne wesentlichen Dampfverbrauch durchgeführt wird, so dass der produzierte Dampf nur gegen eine geringe Gutschrift exportiert werden könnte.

Die vorliegende Erfindung stellt sich die Aufgabe, entsprechende Verfahren und Anlagen zur Gewinnung eines Wasserstoffprodukts unter Verwendung eines ammoniakhaltigen Einsatzes zu verbessern und insbesondere effizienter zu gestalten.

### Offenbarung der Erfindung

Vor diesem Hintergrund werden ein Verfahren und eine Anlage zur Gewinnung eines Wasserstoff enthaltenden Produkts mit den Merkmalen der unabhängigen Patentansprüche vorgeschlagen. Ausgestaltungen sind Gegenstand der abhängigen Patentansprüche und der nachfolgenden Beschreibung.

Der erfindungsgemäße Vorschlag sieht den Einsatz einer Spalteinrichtung zur Ammoniakspaltung vor, die einen autotherm betreibbaren Spaltreaktor (AT-Reaktor) aufweist, der parallel oder seriell zu einem gasbeheizten Reformer (GHR) geschaltet ist. Dabei ist der autotherm betreibbare Spaltreaktor bevorzugt als ATR oder POX ausgeführt und zumindest ausgangsseitig mit dem GHR verbunden.

Die in einem AT-Reaktor bei der Ammoniakspaltung ablaufen Reaktionen werden durch folgende Gleichungen beschrieben:

2 NH₃ + O₂ → 2 H₂O + N₂ + H₂

2 NH₃ → N₂ + 3 H₂

Die zweite Reaktion ist dabei durch den thermodynamischen Gleichgewichtszustand beschränkt.

Die Austrittstemperatur des in einem AT-Reaktor erhaltenen Spaltgases (AT-Spaltgas) liegt gewöhnlich oberhalb von 900°C, insbesondere oberhalb von 1000°C oder 1100°C. Der Wärmeinhalt dieses Spaltgases kann zwar prinzipiell zur Erzeugung von Dampf genutzt werden. Da die Ammoniakspaltung normalerweise aber ohne den Zusatz von Dampf durchgeführt wird, könnte der erzeugte Dampf mit geringem wirtschaftlichem Nutzen nur exportiert werden. Dagegen kann, wenn der Ausgang des autotherm betriebenen Reaktors mit einem GHR verbunden ist und die Wärme des AT-Spaltgases für die innerhalb des GHR ablaufenden Reaktionen verwendet werden.

Der ammoniakhaltige Einsatz kann reines Ammoniak sein. Vorzugsweise handelt es sich aber bei dem ammoniakhaltigen Einsatz um sog. "technisches Ammoniak", das bis zu 0,5Gew.-% Wasser enthalten kann. Derartiges technischer Ammoniak wird weltweit in Tankschiffen und mittels Pipelines transportiert und kann daher in großen Mengen zur Verfügung gestellt werden.

Wie den obigen Reaktionsgleichungen zu entnehmen ist, wird in einem AT-Reaktor wie einem ATR oder einem POX ein Teil des Ammoniaks mit Sauerstoff verbrannt, um die für die Ammoniakspaltung benötigte Wärme zu erzeugen. In einem POX laufen sämtliche Reaktionen ohne den Einsatz eines Katalysators als homogene Gasphasenreaktionen ab (typischerweise bei Temperaturen zwischen 1200°C und 1400°C). Dazu werden ein Oxidationsmittel (Luft, Sauerstoff oder Mischungen davon) und das Ammoniak über eine Brennerlanze in den Reaktor geleitet. Analog hierzu wird in einem ATR in einem Gasraum ein Oxidationsmittel mit Ammoniak zur Reaktion gebracht. Anschließend wird noch nicht umgesetztes Ammoniak in einem stromabwärts angeordneten Katalysatorbett unter Nutzung der durch Ammoniakoxidation erzeugten Wärme gespalten.

Durch die Verwendung des heißen AT-Spaltgases zum Betrieb des GHR, der bevorzugt ebenfalls zur Ammoniakspaltung eingesetzt wird, kann dessen Wärme wesentlich sinnvoller und wirtschaftlicher als zur Dampferzeugung genutzt werden. Hierdurch erhöht sich der als Quotient aus dem chemischen Energiegehalt der Produkte und dem chemischen Energiegehalt der Edukte definierte Kaltgaswirkungsgrad des Verfahrens beträchtlich.

In einer Ausgestaltung des erfindungsgemäßen Verfahrens ist der GHR parallel zum AT-Reaktor angeordnet, wobei ein erster Teil des ammoniakhaltigen Einsatzes dem AT-Reaktor und ein zweiter Teil dem GHR zugeführt wird. In beiden Reaktoren wird Ammoniak gespalten und ein Spaltgas erzeugt. Das im AT-Reaktor mit einer Temperatur von mehr als 900°C erhaltene AT-Spaltgas wird in den GHR geführt, wo es die für die Ammoniakspaltung benötigte Wärme liefert, dabei abgekühlt und mit dem mit katalytischer Unterstützung im GHR gewonnenen Spaltgas (GHR-Spaltgas) vereinigt wird. Da der GHR jeweils eine Zuführung für den ammoniakhaltigen Einsatz und das heiße AT-Spaltgas sowie einen Abzug für die vereinigten Spaltgase aufweist, spricht man von einem 3-Strom-GHR.

In einer anderen Ausgestaltung des erfindungsgemäßen Verfahrens wird eine sog. 4-Strom-GHR eingesetzt, der mit dem autotherm betriebenen Reaktor seriell verschaltet ist. Die gesamte Menge des ammoniakhaltigen Einsatzes wird bei dieser Verfahrensvariante dem GHR zugeführt, wo er mit katalytischer Unterstützung bei einer ersten Spalttemperatur in ein GHR-Spaltgas umgesetzt wird, das neben Wasserstoff und Stickstoff auch einen erheblichen Anteil an nicht umgesetztem Ammoniak aufweist. Das GHR-Spaltgas wird zum AT-Reaktor weitergeführt, in dem der überwiegende Teil des enthaltenen Ammoniaks bei einer höheren zweiten Spalttemperatur umgesetzt wird. Das im AT-Reaktor mit einer Temperatur von mehr als 900°C erhaltene AT-Spaltgas wird anschließend zu dessen Beheizung dem GHR zugeführt, den es abgekühlt wieder verlässt.

Beide Verfahrensvarianten besitzen gegenüber dem Stand der Technik den Vorteil, dass weniger Sauerstoff für die Ammoniakspaltung benötigt und weniger des eingesetzten Ammoniaks zu Wasser oxidiert wird. Darüber hinaus muss zur Abkühlung des Spaltgases weniger oder sogar kein Dampf erzeugt und exportiert werden. Der Einsatz eines 3-Strom-GHR erlaubt es, die Anlage einfacher aufzubauen und das Verfahren mit geringerem Aufwand durchzuführen. Dagegen wird beim Einsatz eines 4-Strom-GHR eine höhere Wasserstoffausbeute erreicht.

In einer Ausgestaltung des erfindungsgemäßen Verfahrens wird dem AT-Reaktor Sauerstoff in Form von reinem Sauerstoff, Luft oder eines Gemisches aus reinem Sauerstoff und Luft zugeführt.

Vorzugsweise ist ein zur Durchführung des Verfahrens eingesetzter ATR mit einem auf Nickel basierendem Katalysator ausgeführt.

Sowohl ein 3-Strom- als auch ein 4-Strom GHR kann mit jedem bereits auf dem Markt erhältlichen oder noch in Entwicklung befindlichen Katalysator ausgeführt sein, der zur Ammoniakspaltung geeignet ist. Bevorzugt wird die Spaltreaktion im GHR mit Unterstützung eines Katalysators durchgeführt, der auf Nickel- oder einem Bimetall oder einem Element der aus Ruthenium, Rhodium, Palladium, Osmium, Iridium und Platin bestehenden Platingruppe basiert. Dabei sind auf Eisen oder einem Mitglied der Platingruppe basierende Katalysatoren besonders vorteilhaft, da die Ammoniakspaltung mit diesen Katalysatoren bei niedrigeren Temperaturen durchgeführt werden kann und dem GHR somit weniger Wärme zugeführt werden muss.

In einer Ausgestaltung wird das Spaltgas oder ein Teil hiervon unter Erhalt einer gegenüber dem Spaltgas an Wasserstoff angereicherten und an Stickstoff und Ammoniak abgereicherten Produktfraktion und eines gegenüber dem Spaltgas an Wasserstoff abgereicherten und an Stickstoff und Ammoniak angereicherten Restgases vorzugsweise einer Druckwechseladsorption unterworfen. Eine derartige Ausgestaltung kann insbesondere dann zum Einsatz kommen, wenn das Wasserstoff enthaltende Produkt im Wesentlichen Wasserstoff ist. Wenn als Produkt Formiergas bereitgestellt werden soll, ist eine Druckwechseladsorption nicht zwingend erforderlich. Hierbei genügt es u.U. lediglich Wasser und Ammoniak aus dem Spaltgas abzuscheiden.

Die Produktfraktion kann in Ausgestaltungen mit Druckwechseladsorption insbesondere zu mehr als 75%, 80%, 90%, 95%, 98%, 99%, 99,5%, 99,9% oder 99,99% aus Wasserstoff bestehen und entsprechend 0,01 bis 25% an anderen Gaskomponenten aufweisen. Das Restgas kann insbesondere 0 bis 10% aus Ammoniak bestehen und ansonsten Stickstoff, Wasserstoff und Wasser enthalten.

Eine im Rahmen des vorgeschlagenen Verfahrens verwendete Druckwechseladsorption kann in jeglicher, aus dem Stand der Technik bekannter Weise durchgeführt werden, wobei die Produktfraktion in der Druckwechseladsorption auf einem Druckniveau gebildet wird, das dem Einspeisedruck in die Druckwechseladsorption entsprecht oder geringfügig darunter liegt, d.h. dass die Produktfraktion in der Druckwechseladsorption im Adsorptionstakt eines oder mehrerer Adsorberbehälter gebildet wird, wobei insbesondere Wasserstoff eine nicht adsorbierende Komponente darstellt. Das Restgas stellt dagegen die bei geringerem Druck im Desorptionstakt gebildete Gasmischung mit den zuvor adsorbierten Komponenten dar.

In einer Ausgestaltung wird der Ammoniakeinsatz in einer Vorbehandlungseinheit unter Erhalt eines überhitzten Ammoniakeinsatzes verdampft und überhitzt. Dazu kann insbesondere ein bei der Aufbereitung des Spaltgases anfallendes Restgas oder ein Teil davon zur Bereitstellung der der Vorbehandlungseinheit zugeführten Wärme verfeuert werden.

In bestimmten Ausgestaltungen des hier vorgeschlagenen Verfahrens kann Wärme des Spaltgases mittels eines Wärmetauschers auf den Ammoniakeinsatz oder einen Teil hiervon übertragen werden. Die übertragene Wärme kann in Ausgestaltungen der Erfindung für die Verdampfung und/oder Überhitzung des Ammoniakeinsatzes in der Vorbehandlungseinheit verwendet werden. Insbesondere wird das Ammoniak mit Hilfe der Spaltgaswärme auf eine Temperatur überhitzt, die nicht mehr als 50 K unter der des heißen Spaltgases liegt.

In Ausgestaltungen der vorliegenden Erfindung kann der AT-Reaktor mit einer Reaktoraustrittstemperatur von 800 bis 1100 °C, insbesondere mit einer Reaktoraustrittstemperatur von 900 bis 1000 °C, betrieben werden. Der AT-Reaktor kann ferner mit einem absoluten Reaktionsdruck zwischen 1 bis 70 bar, insbesondere von 20 bis 60 bar betrieben werden.

Entsprechende Reaktionsdrücke sind besonders vorteilhaft, damit der erzeugte Wasserstoff ohne oder mit nur geringem Verdichtungsaufwand als Produkt abgegeben werden kann. Die Erzielung entsprechender Reaktionsdrücke ist umso einfacher möglich, da der Druck des gewöhnlich flüssig vorliegenden ammoniakhaltigen Einsatzes mit wenig Energieaufwand erhöht werden kann. Damit unter diesen Bedingungen ein ausreichend großer, wirtschaftlich sinnvoller Umsetzungsgrad des eingesetzten Ammoniaks erreicht wird, werden vorteilhafter Weise die angegebenen Reaktionstemperaturen bzw. Reaktoraustrittstemperaturen verwendet.

Im Rahmen der vorliegenden Erfindung kann insbesondere vorgesehen sein, dass die Ammoniakspaltung ohne Zugabe von Dampf zu dem ammoniakhaltigen Einsatz durchgeführt wird. Auf diese Weise können der Wassergehalt im Spaltgas und der damit verbundene Trennaufwand reduziert werden. Ferner reduzieren sich durch den Verzicht auf ein separates Dampfsystem die Investition- und Betriebskosten einer entsprechenden Anlage.

Eine vorgeschlagene Anlage zur Herstellung eines Wasserstoff enthaltenden Produkts ist dafür eingerichtet, einen ammoniakhaltigen Einsatz in einem Spaltreaktor unter Erhalt eines nicht umgesetztes Ammoniak sowie Wasserstoff und Stickstoff enthaltenden Spaltgases umzusetzen.

Die Anlage ist dabei so ausgestaltet, dass die Spalteinrichtung einen AT-Reaktor umfasst, der mit einem GHR strömungstechnisch verbunden ist.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

### Kurze Beschreibung der Zeichnungen

Figur 1 veranschaulicht ein Verfahren bzw. eine Anlage gemäß einer Ausführungsform der vorliegenden Erfindung.
Figur 2 veranschaulicht ein Verfahren bzw. eine Anlage gemäß einer weiteren Ausführungsform der vorliegenden Erfindung.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

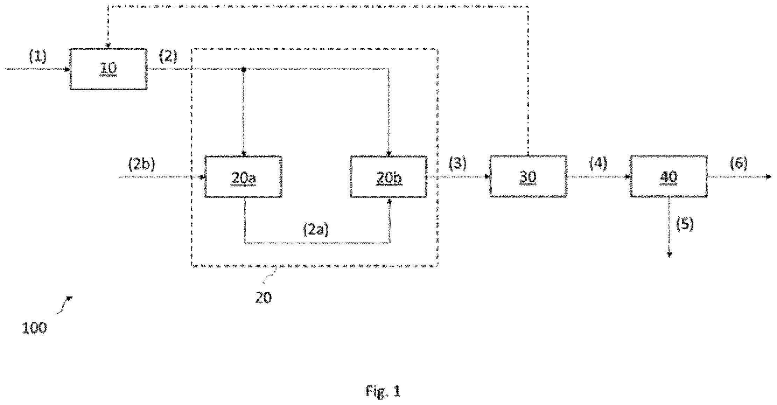

In Figur 1 ist ein Verfahren bzw. einer Anlage gemäß einer Ausgestaltung der vorliegenden Erfindung als Blockdiagramm veranschaulicht und insgesamt mit 100 bezeichnet.

In der hier veranschaulichten Ausgestaltung wird ein ammoniakhaltiger Einsatz 1, beispielsweise aus einem Tank zugeführt, ggf. mittels einer Pumpe unter Druck gesetzt und in einer Vorbehandlungseinheit 10 verdampft und überhitzt. Der verdampfte und überhitzte ammoniakhaltige Einsatz 2 wird der Spalteinrichtung 20 zugeführt, die einen autotherm betriebenen Reaktor (AT-Reaktor) 20a vom Typ eines Autothermalreformers oder eines Partialoxidationsreaktors und einen gasbeheizten Reformer (GHR) 20b, der als 3-Strom-GHR ausgeführt ist, umfasst. Der AT-Reaktor 20a ist dabei mit dem GHR 20b parallel verschaltet, d.h. der ammoniakhaltige Einsatz 2 wird auf beide Reaktoren aufgeteilt. Der Ausgang des AT-Reaktors 20a ist mit dem GHR 20b so verbunden, dass er durch die Wärme des im AT-Reaktor 20a erzeugten Spaltgases (AT-Spaltgas) 2a beheizt wird. Das vom GHR 20b erzeugte Spaltgas (GHR-Spaltgas) und das im GHR 20b abgekühlte AT-Spaltgas werden miteinander gemischt und als Spaltgas 3 aus der Spalteinrichtung 20 abgezogen. Das Spaltgas 3 enthält in der Regel eine gewisse Menge an nicht umgewandeltem Ammoniak, da das thermodynamische Gleichgewicht die Umwandlung bei hoher Temperatur und niedrigem Druck erfordert, die Umwandlung unter technisch relevanten Bedingungen jedoch bei erhöhtem Druck und begrenzter Temperatur vorgenommen wird.

Dem AT-Reaktor 20a wird für die darin ablaufende Reaktion benötigter Sauerstoff wird durch ein Oxidationsmittel 2b zugeführt, bei dem es sich um reinen Sauerstoff oder ein Gemisch aus reinem Sauerstoff und Luft handelt.

Dem heißen Spaltgas 3 wird im Wärmetauscher 30 unter Erhalt von abgekühltem Spaltgas 4 Wärme entzogen, die in der Vorbehandlungseinheit 10 zur Verdampfung und Überhitzung des ammoniakhaltigen Einsatzes 1 genutzt wird. Die Übertragung der Wärme ist dabei mit einer Strich-Punkt-Linie gekennzeichnet. Das abgekühlte Spaltgas 4 wird mittels einer Aufbereitung 40 insbesondere durch Druckwechseladsorption in eine Wasserstoff enthaltene Produktfraktion 6 sowie ein Restgas 5 zerlegt, das in der Vorbehandlungseinheit 10 verfeuert wird, um Wärme für die Aufbereitung des ammoniakhaltigen Einsatzes 1 zu gewinnen.

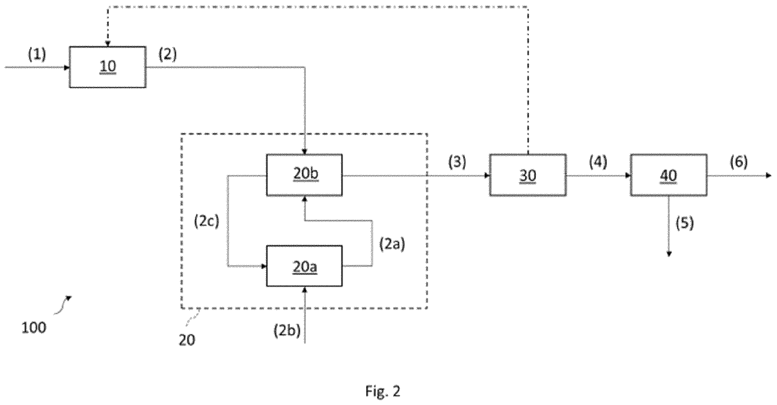

In Figur 2 ist ein Verfahren bzw. einer Anlage gemäß einer weiteren Ausgestaltung der vorliegenden Erfindung als Blockdiagramm veranschaulicht und insgesamt mit 100 bezeichnet.

Im Gegensatz zur in Figur 1 gezeigten Ausführungsform wird der AT-Reaktor 20a nicht direkt mit dem ammoniakhaltigen Einsatz 1 bzw. dem verdampften und überhitzten ammoniakhaltigen Einsatz 2 versorgt, sondern lediglich der GHR 20b, der als 4-Strom-GHR ausgeführt ist. Dieser spaltet den ammoniakhaltigen Einsatz 2 teilweise und versorgt den AT-Reaktor 20a mit dem GHR-Spaltgas 2c. Im AT-Reaktor 20a wird im GHR-Spaltgas vorliegendes Ammoniak unter Verwendung von Sauerstoff 2b gespalten, wobei ein heißes AT-Spaltgas 2a erhalten wird, das dazu Beheizung des GHR 20b verwendet wird. Das so abgekühlte AT-Spaltgas 2a wird anschließend als Spaltgas 3 vom gasbeheizten Reformer 20b abgezogen.

Die weiteren Verfahrensschritte bzw. Anlagenteile entsprechen den Verfahrensschritten bzw. Anlagenteilen der in Figur 1 gezeigten Ausführungsform.

## Patentansprüche

1. Verfahren (100) zur Herstellung eines Wasserstoff enthaltenden Produkts (6), wobei ein ammoniakhaltiger Einsatz (2) in einer Spalteinrichtung (20) unter Erhalt eines nicht umgesetztes Ammoniak sowie Wasserstoff und Stickstoff enthaltenden Spaltgases (3) umgesetzt wird, aus dem das Wasserstoff enthaltende Produkt (6) entsteht, **dadurch gekennzeichnet, dass** in der Spalteinrichtung (20) mit Hilfe eines autotherm betriebenen Reaktors (AT-Reaktor) (20a) aus dem ammoniakhaltigen Einsatz (2) ein heißes Spaltgas (2a) erzeugt und zur Beheizung eines gasbeheizten Reformers (GHR) (20b) verwendet wird.

2. Verfahren nach Anspruch 1, wobei der ammoniakhaltige Einsatz (2) mit Hilfe des GHR (20b) umgesetzt wird

3. Verfahren nach Anspruch 2, wobei der AT-Reaktor (20a) parallel zum GHR (20b) angeordnet ist und ein erster Teil des ammoniakhaltigen Einsatzes (2) dem AT-Reaktor (20a) und ein zweiter Teil dem GHR (20b) zugeführt wird.

4. Verfahren nach Anspruch 2, wobei der AT-Reaktor (20a) seriell zum GHR (20b) angeordnet ist und die Gesamtmenge des ammoniakhaltigen Einsatzes (2) dem GHR (20b) zugeführt wird.

5. Verfahren nach einem der vorhergehenden Ansprüche, wobei ein nach Art eines Autothermalreformers ausgeführter AT-Reaktor (20a) eingesetzt wird.

6. Verfahren nach Anspruch 5, wobei der ammoniakhaltige Einsatz (2) im AT-Reaktor (20a) mit Unterstützung eines auf Nickel basierenden Katalysators umgesetzt wird.

7. Verfahren nach einem der Ansprüche 1 bis 4, wobei ein nach Art eines Partialoxidationsreaktors ausgeführter AT-Reaktor (20a) eingesetzt wird.

8. Verfahren nach einem der Ansprüche 2 bis 7, wobei der ammoniakhaltige Einsatz (2) im GHR (20b) mit Unterstützung eines Katalysators umgesetzt wird, der auf Nickel oder Eisen oder einem Mitglied der Platingruppe basiert.

9. Verfahren nach einem der vorstehenden Ansprüche, wobei der AT-Reaktor (20a) mit einer Reaktoraustrittstemperatur von 800 bis 1100°C, insbesondere von 900 bis 1000°C betrieben wird.

10. Verfahren nach einem der vorstehenden Ansprüche, wobei der AT-Reaktor (20a) mit einem absoluten Reaktionsdruck zwischen 1 und 70 bar, insbesondere zwischen 20 und 60 bar betrieben wird.

11. Anlage (100) zur Herstellung eines Wasserstoff enthaltenden Produkts (6), mit einer Spalteinrichtung (20), in der ein ammoniakhaltiger Einsatz (2) unter Erhalt eines nicht umgesetztes Ammoniak sowie Wasserstoff und Stickstoff enthaltenden Spaltgases (3) umgesetzt werden kann, sowie einer Trenneirichtung (30, 40) mit der das Wasserstoff enthaltende Produkt (6) aus dem Spaltgas (3) erhältlich ist, **dadurch gekennzeichnet, dass** die Spalteinrichtung (20) einen autotherm betreibbaren Reaktor (AT-Reaktor) (20a) sowie einen gasbeheizten Reformers (GHR) (20b) umfasst, die so miteinander verbunden sind, das der GHR (20b) mit einem im AT-Reaktor (20b) erhältliche Spaltgas (2a) beheizt werden kann.

12. Anlage (100) nach Anspruch 11, die zur Durchführung eines Verfahrens nach einem der Ansprüche 1 bis 10 eingerichtet ist.
